# EUROPEAN PATENT APPLICATION

(11) **EP 2 927 706 A1**
(43) Date of publication of application: **07.10.2015**
(21) Application number: 15159501.4
(22) Date of filing: 17.03.2015
(51) Int. Cl.: G01S 7/35

(54) **Hybrid radar system combining FMCW radar and pulsed radar**

(30) Priority: 31.03.2014 US 201461973162 P; 23.04.2014 US 201414260073
(71) Applicant: Honeywell International Inc., Morristown, NJ 07962-2245 (US)
(72) Inventor: Kilty, Brennan, Morristown, NJ 07962-2245 (US); Ferguson, Paul, Morristown, NJ 07962-2245 (US); Pos, Marc, Morristown, NJ 07962-2245 (US); Logan, Gloria, Morristown, NJ 07962-2245 (US)
(74) Representative: Houghton, Mark Phillip

(57) **Abstract**

This disclosure is directed to devices, systems, and methods for operating a hybrid radar that combines Frequency-Modulated Continuous-Wave (FMCW) radar and pulsed radar in a single radar wave-train. In one example, a device includes a hybrid radar system configured to generate a hybrid radar wave-train that combines Frequency-Modulated Continuous-Wave (FMCW) radar and pulsed radar. The device may include a hybrid radar transmission synthesizer and a hybrid radar transmission processing system, communicatively coupled to receive signals from the hybrid radar transmission synthesizer.

## Description

This disclosure relates to radar systems.

### CROSS-REFERENCE TO RELATED APPLICATIONS

This application claims the benefit of U.S. Provisional Application No. 61/973,162, filed March 31, 2014, entitled "HYBRID RADAR SYSTEM COMBINING FMCW RADAR AND PULSED RADAR," the entire content of which is incorporated by reference herein.

### BACKGROUND

Radar system design is typically focused on parameters including probability of detection (Pd), false alarm rate (FAR), blind range, maximum range, and resolution. Traditionally, pulsed radar systems have the advantage of long range performance with higher power transmitters and the signal-to-noise ratio (SNR) gain available via signal processing such as pulse-compression and stepped-frequency processing. However, obtaining high range resolution with a pulsed radar system comes at the price of very high performance hardware in the radio-frequency (RF) front end and/or the signal processing back end, and a pulsed system has a shortcoming of a blind range that increases with the pulse length.

Conversely, Frequency-Modulated Continuous-Wave (FMCW) radar systems can inexpensively produce very high resolution representations of the range profile and natively have a near negligible blind range. However, the transmitter and receiver are both active at the same time, so the FMCW has a transmit power limit determined by the isolation between the transmit (Tx) and receive (Rx) paths of the system. As a result, the SNR at long ranges is often not acceptable for the required Pd and FAR (or Pd/FAR) of the application.

### SUMMARY

This disclosure is directed to systems, devices, and methods for a hybrid radar system that combines FMCW radar and pulsed radar methods. A hybrid radar of this disclosure may combine advantageous characteristics of both FMCW and pulsed radar methods to achieve a low blind range, high range resolution, and long range target detection. A hybrid radar of this disclosure may achieve advantages such as these in a system with more easily achievable specifications and/or lower cost components than might otherwise be needed to obtain similar performance in a strictly pulse radar system or a strictly FMCW radar system. For example, a hybrid radar of this disclosure may use FMCW radar methods to provide short range, high-resolution radar imaging with low power, and use pulsed radar methods to provide long range, high resolution radar imaging with sufficient signal-to-noise ratio (SNR) at long ranges to provide the desired high probability of detection (Pd) and low false alarm rate (FAR). A hybrid radar of this disclosure may also use some solid state hardware in common for operating both FMCW radar and pulsed radar. A hybrid radar system, as described in various examples in this disclosure, may be well suited for application in marine radars that may be used onboard marine vessels for navigation and surveillance in environments that require short range, high resolution radar performance such as around docks and other ships in ports, as well as environments such as the open ocean that require long range performance to support strategic operation of the craft. In some other examples, such a combination may be well suited for application in aviation radars that may be used onboard aircraft for navigation and surveillance functions that require short range, high resolution radar performance such as incursion avoidance in airports or high performance map modes, and for long range strategic planning such as weather detection and avoidance during flight.

In one example, a device includes a hybrid radar system configured to generate a hybrid radar waveform that combines Frequency-Modulated Continuous-Wave (FMCW) and pulsed radar wave-train components.

In another example, a method for operating a hybrid radar combines Frequency-Modulated Continuous-Wave (FMCW) and pulsed radar methods of ranging and detection in a hybrid interleaved radar waveform. This method shares time-on-target between FMCW and pulsed radar methods of detection and ranging (where time-on-target may generally refer to the time the radar has to perform its ranging and detection on any given slice of space as that slice is illuminated by the antenna main-beam as it is scanned across the slice). In more detail, this method includes configuring a hybrid radar transmission and generation system for the generation and transmission of a FMCW waveform while simultaneously configuring a hybrid radar receiving system for receiving an FMCW radar signal for the portion of time the system is configured for FMCW operation. The method further includes a hybrid radar transmission and generation system's configuration for pulsed waveform generation and transmission, and then the simultaneous configuration of a hybrid radar receiver for pulsed mode reception for one or more pulse repetition intervals (PRI) for the portion of time the system is configured for pulsed radar operation. Where in a single PRI, a hybrid radar transmission and generation system is configured to generate and transmit a single pulsed waveform, and then simultaneously the hybrid radar receiver system is configured to receive through a pulsed mode receiver the backscattered pulsed radar signals transmitted at the beginning of that PRI.

Another example is directed to a method for operating a hybrid radar that combines Frequency-Modulated Continuous-Wave (FMCW) radar and pulsed radar in a hybrid radar wave-train. The method includes generating an FMCW wave-train portion configured for FMCW radar. The method further includes configuring a hybrid radar receiving system for receiving an FMCW radar signal at the same time as generating the FMCW wave-train portion configured for FMCW radar. The method further includes generating one or more pulsed wave-train portions configured for pulsed radar. The method further includes configuring the hybrid radar receiving system for receiving pulsed radar signals subsequent to generating each of the one or more pulsed wave-train portions configured for pulsed radar.

In another example, a hybrid radar system is configured to generate a hybrid radar waveform that combines Frequency-Modulated Continuous-Wave (FMCW) and pulsed methods of radar. The hybrid radar system includes means for generating and transmitting a FMCW wave-train portion during the portion of the time-on-target dedicated to the FMCW mode of operation. The hybrid radar system further includes means for configuring a hybrid radar receiving system for receiving an FMCW radar signal at the same time as generating and transmitting the FMCW wave-train portion during the portion of the time-on-target dedicated to the FMCW mode of operation. The hybrid radar system further includes means for generating and transmitting one or more pulsed wave-train portions configured for pulsed radar. The hybrid radar system further includes means for configuring the hybrid radar receiving system for receiving pulsed radar signals subsequent to generating and transmitting each of the one or more pulsed wave-train portions configured for pulsed radar.

In another example, a system is configured for operating a hybrid radar that combines Frequency-Modulated Continuous-Wave (FMCW) radar and pulsed radar in a hybrid radar wave-train. The system is configured to generate an FMCW wave-train portion configured for FMCW radar. The system is further configured to receive an FMCW radar signal at the same time as generating the FMCW wave-train portion configured for FMCW radar. The system is further configured to generate one or more pulsed wave-train portions configured for pulsed radar. The system is further configured to receive pulsed radar signals subsequent to generating each of the one or more pulsed wave-train portions configured for pulsed radar.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 depicts a functional block diagram of an example hybrid radar system that combines Frequency-Modulated Continuous-Wave (FMCW) radar and pulsed radar in accordance with illustrative aspects of this disclosure.
FIG. 2 depicts a functional block diagram of another example hybrid radar system that combines FMCW radar and pulsed radar in accordance with illustrative aspects of this disclosure.
FIG. 3 depicts a functional block diagram of another example hybrid radar system with a hybrid radar transmission synthesizer that includes direct digital synthesizers (DDS), in accordance with illustrative aspects of this disclosure.
FIG. 4 depicts a functional block diagram of another example hybrid radar system with a hybrid radar transmission synthesizer that includes a PLL synthesizer, in accordance with illustrative aspects of this disclosure.
FIG. 5 shows a graph of frequency, timing, and output power of an example hybrid radar transmission signal waveform that combines FMCW radar signal components and pulsed radar signal components, which may be generated by a hybrid radar system in accordance with illustrative aspects of this disclosure.
FIG. 6 shows a graph of frequency, timing, and output power of another example hybrid radar transmission signal waveform that combines FMCW radar signal components and pulsed radar signal components, which may be generated by a hybrid radar system in accordance with illustrative aspects of this disclosure.
FIG. 7 shows a flowchart for a method for operating a hybrid radar that combines FMCW radar and pulsed radar in a single radar waveform in accordance with illustrative aspects of this disclosure.

### DETAILED DESCRIPTION

Various examples are described below generally directed to devices, integrated circuits, systems, and methods for a hybrid radar system that combines Frequency-Modulated Continuous-Wave (FMCW) radar and pulsed radar. As noted above, a hybrid radar system of this disclosure may include advantageous characteristics in both long range and short range performance. In some examples, such a combination may be well suited for application in marine radars or aviation radars that may be used for surveillance and navigation in both ports and the open sky or ocean, where both high resolution short range and long range detection performance are required by the same system. An aircraft or a ship may be equipped with a hybrid radar system that operates in both pulsed and FMCW radar modes and that may generate for display an integrated hybrid radar output that shows an integrated view of the entire range of interest from short range to long range.

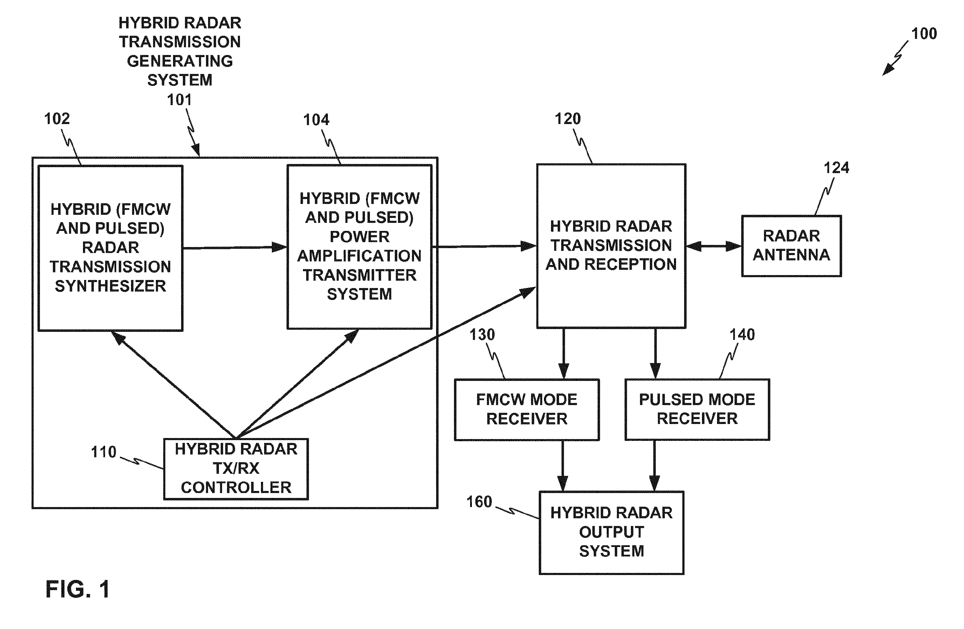

FIG. 1 depicts a functional block diagram of an example hybrid radar system 100 that combines FMCW radar and pulsed radar in accordance with illustrative aspects of this disclosure. An implementation of hybrid radar system 100 may be used on board a marine vessel or an aircraft for surveillance and navigation needs that span from short range to long range, in some examples. Hybrid radar system 100 includes a hybrid radar transmission synthesizer 102 in communicative connection, such as by an analog signal path, with a hybrid power amplification transmitter system 104. Hybrid radar transmission synthesizer 102 may synthesize FMCW radar and pulsed radar transmission signals, and hybrid power amplification transmitter system 104 may control and process both FMCW radar and pulsed radar transmission signals, and may include transmitter mode control, switching, and amplification functions. In some examples, hybrid radar transmission synthesizer 102 and hybrid power amplification transmitter system 104 may both be implemented in solid state hardware, and may generate both FMCW radar transmission signals and pulsed radar transmission signals in the same solid state hardware, rather than generating pulsed radar transmission signals using high-power vacuum tube hardware (e.g., hardware that includes a traveling-wave tube amplifier (TWTA) or a magnetron) that is incompatible with FMCW radar transmission signals.

Both hybrid radar transmission synthesizer 102 and hybrid power amplification transmitter system 104 may operate under the control of hybrid radar transmission and reception (Tx/Rx) controller 110. Hybrid radar transmission synthesizer 102, hybrid power amplification transmitter system 104, and hybrid radar Tx/Rx controller 110 may be considered collectively as hybrid radar transmission generating system 101. Hybrid power amplification transmitter system 104 may provide amplified hybrid radar transmission signals, including both FMCW and pulsed radar transmission signals, to hybrid radar transmission and reception system 120, which may provide signals to and receive signals from radar antenna 124. Hybrid radar transmission and reception system 120 may alternate, under the control of controller 110, between an FMCW receive mode and a pulsed receive mode, to route the received FMCW radar signals to FMCW mode receiver 130 and to route the pulsed radar signals to pulsed mode receiver 140. FMCW mode receiver 130 and pulsed mode receiver 140 may both condition and digitize the received radar signals, and pass the conditioned and digitized signals to a hybrid radar output system 160.

Hybrid radar transmission generating system 101 may interleave pulsed radar waveform components, such as high-power pulses, with FMCW radar waveform components, such as low-power frequency chirps, in a train of waveforms (or a wave-train) over a single time-on-target. Hybrid radar transmission generating system 101 may also interleave pulsed and FMCW modes from one scan of the radar antenna to another. Hybrid radar transmission generating system 101 may generate a train of pulses and pulse receive intervals for pulsed radar that are interleaved or time multiplexed with the FMCW waveform components into a single wave-train transmission sequence. Hybrid radar transmission generating system 101 may or may modulate the pulses (in frequency, phase, amplitude, or otherwise) to facilitate some processing gain upon reception. In examples that may apply frequency modulation to the pulsed radar waveforms, hybrid radar transmission generating system 101 may use linear frequency modulation (LFM) and/or non-linear frequency modulation (NLFM). Hybrid radar transmission generating system 101 may thereby generate radar transmission signals to be processed into a single radial that may include waveforms designed for both FMCW radar and pulsed radar methods. Hybrid radar system 100 may use "hybrid radar" in the sense that it generates radar transmission signals that include both FMCW radar and pulsed radar components in a single wave-train, such that the separate FMCW and pulsed waveforms are processed and combined in the output system 160 to form a single integrated wave train or radial, or range-indexed array of detections. Hybrid radar system 100 may also use "hybrid radar" in the sense that it that it receives and decodes radar signals that are returns from a FMCW radar transmission or a pulsed radar signal transmission. Hybrid radar transmission generating system 101 may also synthesize both FMCW radar and pulsed radar transmission waveform components on the same solid-state, transistor-based hardware, alternating between a low-power mode for generating FMCW waveform components and high-power mode for generating pulsed waveform components.

Hybrid radar transmission synthesizer 102 may generate a radar signal that includes the center frequency and the modulated frequency content for both pulsed radar signals and FMCW radar signals with the same solid state hardware. Hybrid power amplification transmitter system 104 may amplify the pulsed radar and FMCW signals generated by hybrid radar transmission synthesizer 102, and perform switching of the pulsed radar signals. Hybrid radar system 100 may thereby provide an integrated and efficient single source for hybrid radar signals that allow for both FMCW and pulsed methods of radar to be accomplished in a single integrated transceiver and processing system. Hybrid radar system 100 may thereby provide an integrated solution for radar that may excel at both long range and short range applications.

Traditionally, radar systems required to show both short range and long range simultaneously might be implemented as a pulsed radar system based on tube hardware. A typical short-to-long range pulsed radar system transmits a pulsed radar wave train (or pulse-train) with pulse characteristics designed to provide the required performance. However, pulsed radar is generally not well suited for short range performance. For example, pulsed radar generally has an inherent blind range due to the receiver being off when the transmitter is on. Additionally, there are limitations at how short a pulse can be; shorter pulses become more and more affected by rise and fall times of the hardware in the transmitter (with tighter control on these variables driving up cost), and the output power generally suffers from stability issues, especially for implementations based on a magnetron, for which power and frequency content are resistant to fine control. In short range maneuvering contexts of port navigation and object incursion avoidance (e.g., for an aircraft in airports, or for a ship in harbors or lock systems), the range resolution and blind range desired may be very expensive for a characteristically long range pulsed radar to support.

Hybrid radar system 100 may resolve those disadvantages of typical systems by providing range resolution and blind range parameters in such short range maneuvering contexts through FMCW radar elements of a hybrid radar rather than through pulsed radar. The FMCW radar may provide high-resolution imaging at a significantly shorter range than the minimum blind range inherent in the pulsed radar elements. Additionally, hybrid radar system 100 may offer advantageous performance in such short range maneuvering contexts by operating at lower power than pulsed radar, which could reduce artifacts due to multi-time around echo (MTAE) and range side-lobes due to the high radar cross section (RCS) typical of targets in port environments. Hybrid radar system 100 with interleaved pulsed operation and FMCW operation in a single time-on-target may allow for a fast update rate of an entire scene, relative to a system that alternates between modes between scans by a radar antenna.

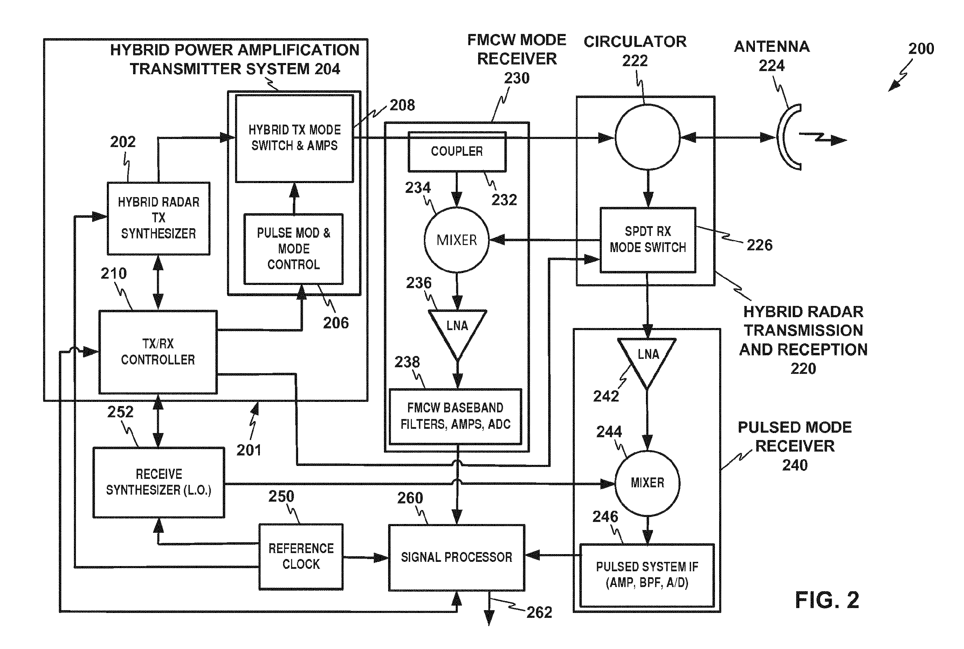

FIG. 2 depicts a functional block diagram of an example hybrid radar system 200 that combines FMCW radar and pulsed radar in accordance with illustrative aspects of this disclosure. Hybrid radar system 200 shows an example of a functioning radio frequency (RF) and signal processing layout, and is similar to hybrid radar system 100 of FIG. 1 while showing additional detail according to one example. Hybrid radar system 200 includes hybrid radar transmission synthesizer 202 in communicative connection with hybrid power amplification transmitter system 204. Hybrid radar transmission synthesizer 202 may generate the center frequency and the modulated frequency content for both FMCW radar and pulsed radar transmission signals, and hybrid power amplification transmitter system 204 may amplify both FMCW radar and pulsed radar transmission signals as well as switch the pulsed waveform on and off. Hybrid power amplification transmitter system 204 includes components such as pulse modulator and mode control component 206, and hybrid transmit mode switch and amplifiers 208. Component 206 may include a pulse modulator that may switch a pulsed radar signal on and off, and a mode control component that may set the gain of power amplifiers in component 208. Component 208 may include one or more power amplifiers, and a hybrid transmit mode switch that may allow for the power amplifiers to be circumvented in FMCW mode.

Both hybrid radar transmission synthesizer 202 and hybrid power amplification transmitter system 204 may operate under the control of hybrid radar transmission/reception (Tx/Rx) controller 210. Hybrid radar transmission synthesizer 202, hybrid power amplification transmitter system 204, and hybrid radar Tx/Rx controller 210 collectively form hybrid radar transmission generating system 201. Hybrid power amplification transmitter system 204 may provide hybrid radar transmission signals, including both amplified FMCW radar and amplified pulsed radar transmission signals, originating from hybrid radar transmission synthesizer 202, to hybrid radar transmission and reception system 220, which may provide signals to and receive signals from radar antenna 224. Hybrid radar transmission and reception system 220 may include circulator 222 and single-pole double-throw (SPDT) receive mode switch 226.

Hybrid radar system 200 may include a radar system front end (e.g., hybrid radar transmission generating system 201) that may include a radio frequency (RF), intermediate frequency (IF), and baseband architecture that may be implemented in solid state hardware and/or software. Hybrid radar transmission generating system 201 (e.g., in hybrid radar transmission synthesizer 202) may implement a waveform interleaving design that interleaves FMCW radar signal waveform components and pulsed radar signal waveform components. Hybrid radar transmission generating system 201 (e.g., in hybrid power amplification transmitter system 204) may perform FMCW and pulsed radar waveform transmission switching and amplification, that may be implemented in software and/or solid state hardware, to enable wave-trains that combine both FMCW and Pulsed Radar to be transmitted and received. In various examples, functions ascribed to hybrid radar transmission synthesizer 202 and/or hybrid power amplification transmitter system 204 may also be performed by each other or by other components of hybrid radar system 200.

Hybrid radar system 200 may use the same transistor-based hardware, and/or the same software, in hybrid radar transmission generating system 201 (e.g., in one or more of hybrid radar transmission synthesizer 202, hybrid power amplification transmitter system 204, and hybrid radar Tx/Rx controller 210) in both the FMCW and pulsed modes of operation to generate both high-power pulsed radar and low-power FMCW radar transmission signals. A user may program the same synthesizer hardware in hybrid radar transmission generating system 201 to generate any kind of a wide variety of radar waveforms, including pulsed radar or FMCW radar signals. In one example, hybrid radar system 200 may be implemented to use transmission power in the tens to hundreds of milliwatts (mW) in FMCW mode, and around 20 or 30 watts to several hundred watts, or from around 10 watts to around 1,000 watts, in pulsed radar mode. Hybrid radar system 200 may be implemented in different frequency bands for different applications. In some examples, hybrid radar system 200 may be implemented in S band or X band radar, which may be used in marine vessel and/or aircraft applications, for example.

Circulator 222 may be shared in common for FMCW mode and pulsed radar mode transmission and reception. Circulator 222 may operate the same way in both FMCW mode and pulsed mode waveform components. While hybrid radar system 200 may include significant commonality between FMCW mode hardware components and pulsed mode hardware components, such as in hybrid radar transmission generating system 201, it may be advantageous to use dedicated receiver systems for the two modes, e.g., FMCW mode receiver 230 and pulsed mode receiver 240.

Circulator 222 may receive hybrid radar signals from hybrid transmit mode switch and amplifiers 208, and route the hybrid radar signals to antenna 224 to transmit. Hybrid radar system 200 may also perform a method of steering the antenna beam, if it is a scanning radar. Antenna 224 may radiate radar signals and then collect reflected radar returns and pass those received signals to circulator 222. Circulator 222 may route the received radar signals to SPDT receive mode switch 226. Receive mode switch 226, under the control of Tx/Rx controller 210, may distinguish the radar signals it receives into FMCW radar signals and pulsed radar signals (e.g., by timing or by frequency). Tx/Rx controller 210 (or equivalent system) may configure receive mode switch 226 and may route the received FMCW radar signals to FMCW mode receiver 230, and route the pulsed radar signals to pulsed mode receiver 240. Hybrid radar system 200 may also form part of a larger radar system or include other elements not depicted in FIG. 2. For example, hybrid radar system 200 may also include a power supply; a method of steering the antenna beam if it is a scanning radar; mode control inputs (control panel or other); platform inputs (e.g., pitch, roll, heading, ground speed), if the system is to be stabilized; a central or distributed set of processors; a memory system; and an information output, such as a radar display, that may be communicatively coupled to hybrid radar output interface 262 (not depicted in FIG. 2).

Hybrid radar system 200 may also include a reference clock 250, a receive synthesizer local oscillator (LO) 252, and a signal processor 260 with a hybrid radar output interface 262. Reference clock 250 may provide a reference clock signal to hybrid radar transmission synthesizer 202, receive synthesizer local oscillator (LO) 252, and signal processor 260. In various examples, the signal processing hardware and/or software, including FMCW mode receiver 230, pulsed mode receiver 240, and signal processor 260, may process the respective FMCW radar signals and pulsed radar signals separately and then combine the resulting range referenced detections in a composite array of values that covers the entire desired range (e.g., a radial).

In the example of FIG. 2, FMCW mode receiver 230 includes coupler 232, mixer 234, low noise amplifier (LNA) 236, and FMCW baseband receiver system 238. FMCW baseband receiver system 238 may include one or more analog filters, one or more amplifiers, and an analog-to-digital converter (ADC). Coupler 232 may be communicatively connected to the main transmit path between hybrid power amplification transmitter system 204 and circulator 222. Mixer 234 may receive the received FMCW radar signals from receiver mode switch 226 and multiply them with an attenuated copy of the FMCW transmission signal from the coupler 232. The resulting signal is then passed from mixer 234 to LNA 236 for amplification and then to a FMCW baseband receiver system 238. FMCW baseband receiver system 238 may then communicate the processed digital form of the sampled and digitized signal to signal processor 260.

In this example, pulsed mode receiver 240 includes LNA 242, mixer 244, and pulsed radar intermediate frequency (IF) processing system 246. Mixer 244 may also receive a signal from a receive synthesizer 252. Mixer 244 may multiply the received pulsed returns with an output from receive synthesizer local oscillator (LO) 252 that frequency shifts the RF radar returns to the IF frequency range. LO 252 may operate independently of the Tx synthesizer 202 and yet maintain coherency during retracing of the synthesizer LO 252 for a new FMCW chirp during the receive interval of a pulse. Pulsed radar processing system 246 may include one or more amplifiers, one or more analog filters, and an ADC. Pulsed radar processing system 246 may then communicate the conditioned and sampled digital form of the received pulsed radar signal to signal processor 260. Signal processor 260 thus receives processed, digital outputs of both the FMCW mode receiver 230 and the pulsed mode receiver 240. Signal processor 260 may combine the processed, digital outputs of both the FMCW mode receiver 230 and the pulsed mode receiver 240 and communicate the combined hybrid radar output via hybrid radar output interface 262. Signal processor 260 may also provide feedback to hybrid radar Tx/Rx controller 210.

The combined hybrid radar output via hybrid radar output interface 262 may be used for a hybrid radar display or other user interface that shows users a combined hybrid radar signal. Some examples may instead not include a user interface, and instead, hybrid radar output interface 262 may simply provide information to an autonomous system or be embedded in a larger system. The combined hybrid radar signal from hybrid radar output interface 262 may show a radar signal from short range to long range in a seamless and integrated view, without any indication of separate divisions between signal components that are sourced from FMCW mode or pulsed mode methods. Signal processor 260 may use solid state hardware, firmware, and/or software implementing algorithms that process radar inputs from both FMCW mode receiver 230 and from pulsed mode receiver 240 and from zero range to maximum range in common. Signal processor 260 may generate a combined hybrid radar display output that is seamless, and may include no artifacts from the upstream separation of the two radar signal modes.

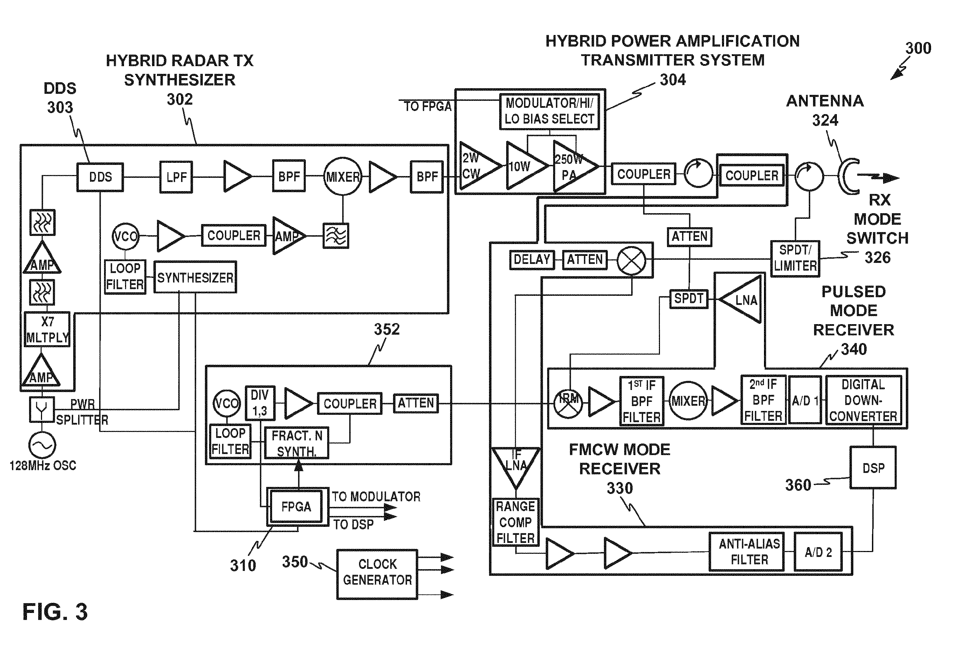

FIG. 3 depicts a functional block diagram of another example hybrid radar system 300 with a hybrid radar transmission synthesizer 302 that includes direct digital synthesizer (DDS) 303, in accordance with illustrative aspects of this disclosure. Hybrid radar system 300 is analogous in some respects to hybrid radar systems 100 and 200 of FIGS. 1 and 2, and also shows additional detail according to one example. FIG. 3 uses similar numbering for analogous components to the examples of FIGS. 1 and/or 2, including hybrid radar transmission synthesizer 302, hybrid power amplification transmitter system 304, hybrid radar transmission/reception controller 310, antenna 324, receive mode switch 326, FMCW mode receiver 330, pulsed mode receiver 340, clock generator 350, receive synthesizer 352, and digital signal processor (DSP) 360.

FIG. 3 shows details of components of hybrid radar transmission synthesizer 302 in one example implementation. In hybrid radar system 300, hybrid radar transmission synthesizer 302 uses a direct digital synthesizer (DDS) 303 to generate pulse patterns for a radar signal waveform for a hybrid radar system. Implementing hybrid radar transmission synthesizer 302 with DDS 303 may enable substantial flexibility in the pulsed radar waveform components hybrid radar transmission synthesizer 302 is able to generate.

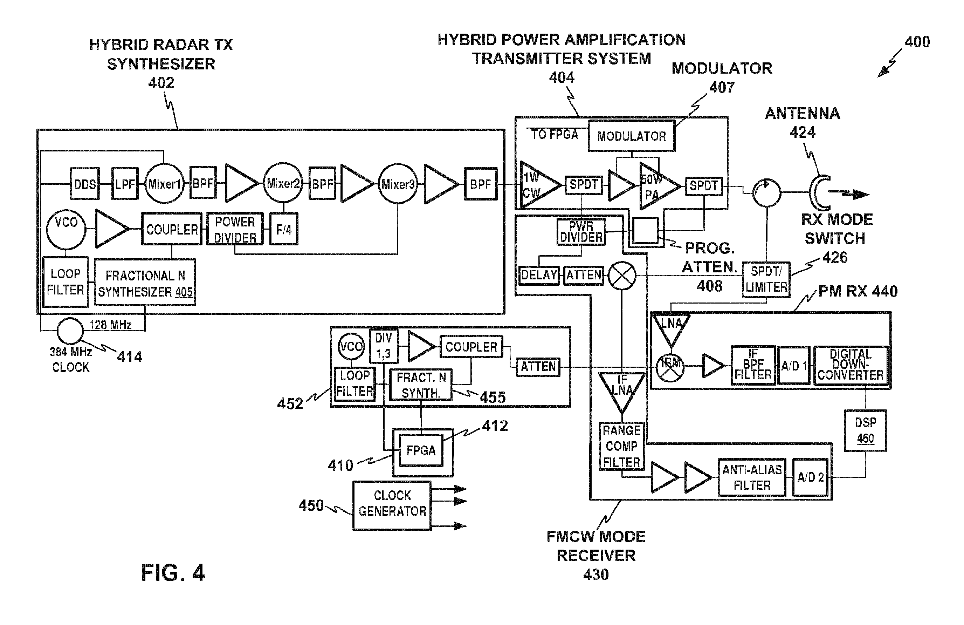

FIG. 4 depicts a functional block diagram of another example hybrid radar system 400 with a hybrid radar transmission synthesizer 402 that includes a fractional N synthesizer 405, in accordance with illustrative aspects of this disclosure. Hybrid radar system 400 is also analogous in some respects to hybrid radar systems 100 and 200 of FIGS. 1 and 2, with similar numbering for analogous components, and also shows additional detail according to one example. FIG. 4 uses similar numbering for analogous components to the examples of FIGS. 1, 2, and/or 3, including hybrid radar transmission synthesizer 402, hybrid power amplification transmitter system 404, hybrid radar transmission/reception controller 410, antenna 424, receive mode switch 426, FMCW mode receiver 430, pulsed mode receiver 440, clock generator 450, receive synthesizer 452, and digital signal processor (DSP) 460.

FIG. 4 shows details of components of hybrid radar transmission synthesizer 402 in one example implementation. In hybrid radar system 400, hybrid radar transmission synthesizer 402 uses a fractional N synthesizer 405 (e.g., employing a fractional N phase locked loop (PLL) circuit configured for fractional frequency multiplication (factor N) of the synthesized transmission frequency based on the reference frequency) to generate radio frequency (RF) wave-train components for a radar signal waveform for a hybrid radar system. Implementing hybrid radar transmission synthesizer 402 with fractional N synthesizer 405 may be implemented relatively economically (e.g., more economically than hybrid radar transmission synthesizer 302 of hybrid radar system 300), in some implementations. Hybrid radar transmission synthesizer 402 may also be implemented with a different PLL synthesizer other than a fractional N synthesizer, in various examples.

Hybrid power amplification transmitter system 404 as implemented in the example of FIG. 4 includes modulator 407 and programmable attenuator 408. Hybrid radar transmission/reception controller 410 as implemented in the example of FIG. 4 may include field programmable gate array (FPGA) 412. FPGA 412 may communicate outputs to hybrid radar transmission synthesizer 402, hybrid power amplification transmitter system 404, receive synthesizer 452, receive mode switch 426, and DSP 460. In particular, FPGA 412 may communicate outputs to fractional N synthesizer 405 of Tx synthesizer 402 and to fractional N synthesizer 455 of receive synthesizer 452. Clock 414 may provide a 128 megahertz (MHz) clock signal to fractional N synthesizer 405 of Tx synthesizer 402, in this example. Implementation details, such as system components, clock signal frequencies, etc., may vary in other embodiments.

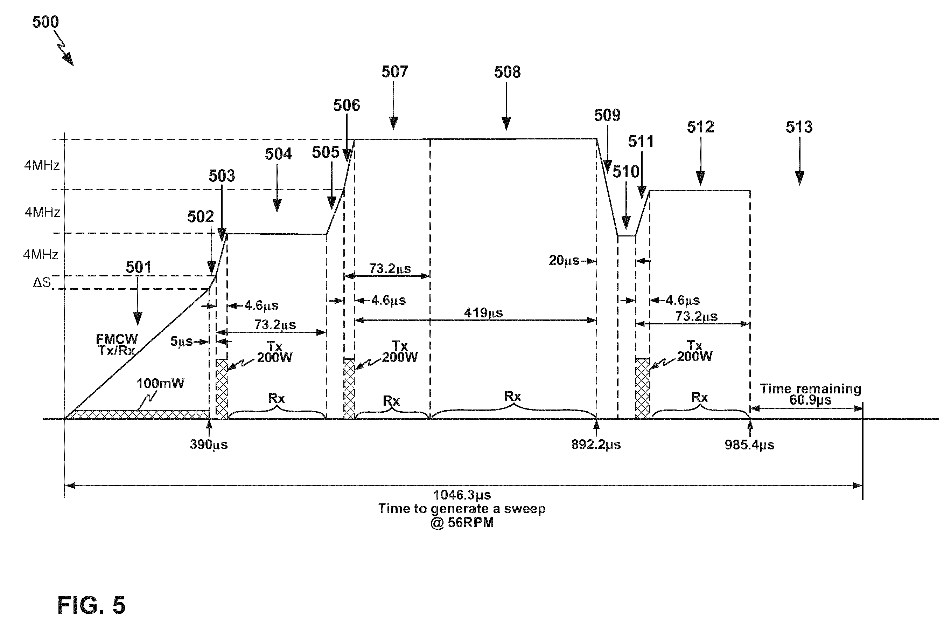

FIG. 5 shows a graph of an example hybrid radar train of waveforms 500 (or a "wave-train 500") that interleaves FMCW radar signal components and pulsed radar signal components, which may be generated by a hybrid radar system (e.g., hybrid radar systems 100, 200, 300, 400 of FIGS. 1-4) in accordance with illustrative aspects of this disclosure. Hybrid radar wave-train 500 is illustrated in both frequency over time and transmit power over time in FIG. 5, and is divided into a sequence of wave-train portions 501-513 (also referred to as wave-train components or simply portions or components), some of which are used for FMCW radar, some of which are used in pulsed radar transmission and/or reception, and some of which are used in the transition between the two modes, as further explained below. Hybrid radar wave-train 500 is described below in an example in which hybrid radar transmission generating system 101 of FIG. 1 may generate hybrid radar wave-train 500 for a hybrid radar transmission signal that the hybrid radar system may synthesize and transmit to a radar antenna for directing emissions towards a target area; and in which receive elements of hybrid radar system 100 (e.g., hybrid radar transmission and reception system 120, FMCW mode receiver 130, pulsed mode receiver 140) may be timed to process received radar signals intercepted by a radar antenna as reflections of the transmitted hybrid radar signals as synthesized and generated by hybrid radar transmission generating system 101.

Aspects attributed to wave-train 500 in the description may be considered to be implemented by hybrid radar transmission generating system 101. A similar description may be applicable to wave-trains generated by analogous systems of other hybrid radar system implementations, such as the example hybrid radar systems 200, 300, or 400 of FIGS. 2-4. For example, within hybrid radar transmission generating system 101, hybrid radar transmission synthesizer 102 may generate the waveform components of waveform 500 under the control of hybrid radar Tx/Rx controller 110. Hybrid radar transmission synthesizer 102 may then produce the signal base from which a hybrid power amplification transmitter system 104 switches and amplifies the wave-train 500 for transmitting in a radar signal transmission. Hybrid radar transmission generating system 101 may generate wave-train 500 with receive intervals timed to coincide with intervals of operation by other components of hybrid radar system 100 involved in receiving the radar signal. Other examples may use different arrangement of functions performed by different components.

Hybrid radar transmission generating system 101 may generate wave-train 500 such that wave-train 500 includes one or more saw-tooth FMCW sweep or chirp waveform components for FMCW radar. Hybrid radar transmission generating system 101 may then switch to transmit pulsed radar signal components, such as frequency modulated (FM) pulse signals, in a subsequent portion of wave-train 500. As shown in the example of FIG. 5, hybrid radar transmission generating system 101 may perform interleaving of waveform components for low power FMCW radar and high power FM pulsed radar into a single, interleaved wave-train 500. Wave-train 500 is an example that may include user inputs specifying certain parameters, such as to select a distance range. Hybrid radar transmission generating system 101 may organize waveform 500 so that the entire specified distance range is covered in a single time-on-target. By supporting a combined range with a single, interleaved wave-train 500 instead of trying to cover short range and long range with alternating radar scans, hybrid radar system 100 may enable various advantages, such as a superior radar picture refresh rate.

As noted above, wave-train 500 in this example includes wave-train portions 501-513. Wave-train portion 501 is an FMCW radar transmit/receive component; wave-train portions 503, 506, and 511 are pulsed radar transmit components; wave-train portions 504, 507, 508, and 512 are pulsed receive components; and wave-train portions 502, 505, and 509 are interval components in which the transmission frequency is modified without transmitting. Wave-train portion 510 is an interval component that may be used as a convenience for drawing the transition from down tracing a synthesizer local oscillator (LO) (e.g., synthesizer LO 252 in the example of FIG. 2) from a higher frequency to then chirping the synthesizer LO up for a radar transmission. Wave-train portion 513 is an unused portion in this example that generally indicates that the timing examples described above allow for significant margin, and that is free to be used for additional purposes, potentially including expanding the use of any of the components described above, or for including later modifications.

Hybrid radar transmission generating system 101 implements FMCW radar transmit/receive component 501 with a sweep or chirp across a wide range of frequencies, which may be from zero to several megahertz or above several hundred megahertz, in this example, in terms of the offset or range of modulation from a center frequency or reference frequency. Hybrid radar transmission generating system 101 may use a center frequency of around 9 gigahertz (GHz) for X band radar, or below 300 megahertz (MHz) for HF radar, or about 100 GHz for W Band radar, as just some illustrative examples from across a wide range of potential uses. FMCW mode may sweep across other frequency ranges in other examples. FMCW radar transmit/receive component 501 may transmit at both a lower power and a lower frequency range than pulsed radar transmit components 503, 506, and 511. FMCW mode components may also be at higher frequencies than pulsed mode components in the same wave-train, in some implementations. FMCW radar transmit/receive component 501 may also be used for receiving at the same time as transmitting a radar signal, in a continuous wave (CW) operation. This may contribute to the FMCW mode's suitability for short range operation, with the radar system enabled to receive signals at the same time as transmitting. As an example of its low power, hybrid radar transmission generating system 101 may transmit FMCW radar transmit/receive component 501 at a power of 100 milliwatts (mW) in this example, or with power levels from the tens of milliwatts to several watts, or in other ranges, in other examples.

Hybrid radar transmission generating system 101 implements pulsed radar transmit components 503, 506, and 511 with frequency hops between the three different components, in this example. Pulsed radar transmit components 503, 506, and 511 may each sweep through a selected range of frequencies that are non-overlapping and contiguous, but in a discontinuous order, in this example. In particular, pulsed radar components 503 and 506 cover frequency ranges that are separated by a gap in frequency range, and pulsed radar transmit component 511 covers the frequency range of the gap defined between components 503 and 506. In the example of FIG. 5, pulsed radar transmit components 503, 506, and 511 each sweep through a range of four megahertz. Component 511 is contiguous in frequency with component 503 but separated in time from component 503, thereby forming a frequency hop between the two components. Similarly, component 506 is contiguous in frequency with component 511 but separated in time from component 511. Waveform 500 thereby includes frequency hops between the three pulsed mode transmission components 503, 506, and 511, while covering what is together a continuous range of frequencies among the three components. Advantages from this frequency hopping are further described below.

In the particular example of FIG. 5, hybrid radar transmission generating system 101 operates at 56 revolutions per minute (RPM). Wave-train 500 has a total duration of 1,046.3 microseconds to generate one radial (or radar sweep or time-on-target). FMCW radar transmit/receive component 501 has a sampling time Tₛ of 390 microseconds (µs), a transmit power (Pₜ) of 100 milliwatts (mW), and a bandwidth (BW) of 16.8 megahertz (MHz). The three pulsed mode transmission components 503, 506, and 511 are implemented as linear FM stepped frequency pulse trains with a pulsed radar transmit time duration term τ_{µc} of 4.6 microseconds (µs), a transmit power Pₜ of 200 watts (W), and a bandwidth (BW) of 4 megahertz (MHz). These values are characteristic of the example of FIG. 5, and hybrid radar systems may implement waveforms with other parameters in other examples.

Wave-train 500 includes a pulsed radar wave-train component appended to the end of an FMCW sweep waveform component. In particular, as shown in FIG. 5, pulsed radar transmission pulse train wave-train component 503 is appended to the end of FMCW radar wave-train component 501, separated only by a short interval 502 of 5 microseconds, in one example. More generally, this interval may be the time for a synthesizer local oscillator (e.g., synthesizer LO 252 in FIG. 2) to trace to a configuration to chirp the FM pulse from as well as to allow the system to reconfigure for pulsed operation (e.g., to change amplifiers and switching).

Wave-train 500 also includes both a standard receive interval 507 and a longer-range receive interval 508 within a single, continuous, monotonous-frequency segment of wave-train 500 for processing of signals received from pulsed mode transmit component 506. Hybrid power amplification transmitter system 104 may be clamped off during standard receive interval 507 and longer-range receive interval 508, so no frequency content is transmitted from the radar antenna. A synthesizer LO (e.g., synthesizer LO 252 in FIG. 2) may remain configured at that frequency while it waits for a subsequent pulse chirp transmission or frequency hop. During wave-train intervals 507 and 508, receivers (e.g., FMCW mode receiver 230 and pulsed mode receiver 240 of FIG. 2) may collect and process returns reflected back into the radar antenna from the pulse transmission 506. Hybrid radar system 100 may thus use segment 507 and 508 in two different processing sets for a receiver to perform detection and ranging over two different segments of the range profile. Hybrid radar system 100 may process the signal samples received in interval 507 together with the pulsed mode received signals from receive components 504 and 512 to produce a high range resolution at a relatively shorter-range portion of the pulsed mode range (e.g., using stepped frequency processing). Hybrid radar system 100 may process the signal samples received in interval 508 with normal pulse compression to cover a longer-range portion of the pulsed mode range. Hybrid radar system 100 thereby uses pulsed mode transmit component 506 as a dual use pulse to enable efficient use of the time-on-target while accommodating high resolution needs at short range and a more moderate range resolution at longer distance.

Wave-train 500 also enables the last receive interval 512 after the last pulsed mode transmit pulse 511 before the subsequent FMCW sweep interval of wave-train component 501 of the subsequent repetition of wave-train 500. This may enable hybrid radar system 100 to reconfigure hybrid radar transmission synthesizer 102 to retrace to the frequency desired for the start of the subsequent FMCW sweep interval of wave-train component 501, as soon as hybrid radar transmission synthesizer 102 finishes generating the final pulsed mode transmit component 511, while the receiving elements of hybrid radar system 100 (e.g., hybrid radar transmission and reception system 120, pulsed mode receiver 140) independently process the received signals during pulsed mode receive interval 512. Using the last receive interval 512 in pulse transmission to retrace hybrid radar transmission synthesizer 102 back down to a lower frequency to get ready for the next FMCW sweep interval of wave-train component 501 may enable a substantial advantage in efficiency of use of time in hybrid radar transmission synthesizer 102.

Hybrid radar system 100 may therefore use pulses and pulse repetition intervals (PRIs) such that a single wave-train 500 can support both a shorter range portion of the range profile as part of an FMCW stepped frequency pulse train, and a longer range portions of the range profile as part of a pulsed radar. By using portions of a wave-train transmission for both FMCW and pulsed radar, hybrid radar system 100 may make efficient use of time on target, thereby contributing to better signal-to-noise ratio (SNR), gaining both FMCW signals and pulsed signals from a single radar sweep of a target. Using portions of a single wave-train 500 for both FMCW radar and pulsed radar may enable hybrid radar system 100 to meet discontinuous requirements for minimum target radar cross-section (RCS) with respect to range in performance requirements for marine radar, in each radar sweep based on a hybrid radar waveform such as waveform 500. A hybrid radar system may thereby offer advantageous performance within various constraints of applications such as marine radar for marine vessels. These constraints may include requirements for a high antenna scan rate (and display update rate) and a relatively limited transmission power of solid state systems.

Hybrid radar system 100 may incorporate high pulse repetition frequency (PRF) and frequency hopping in waveform 500 to implement stepped frequency processing, to avoid interference, and to mitigate resulting false target locations due to multi-time around echo (MTAE) or targets beyond a non-ambiguous range. Frequency hops may skip at least one frequency channel to improve isolation from MTAE, which may cause echoes from one pulse to the next coming into the receiver. Improving isolation from MTAE may compensate for imperfect filtering by an implementation of an IF band pass filter. The order of frequency hops as well as the planning of pulse repetition intervals (PRIs) in wave-train 500 may at various times reuse returns from a single component pulse of waveform 500 for both stepped-frequency (SF) and normal pulse compression to support segments of the range profile with different range resolution and/or SNR needs while efficiently managing the available time-on-target. Hybrid radar system 100 thereby combines both FMCW mode waveform components and pulsed mode wave-train components in a hybrid radar waveform that uses one or more elements of the wave-train 500 for dual functions. Radials resulting from multiple wave-train 500 transmission/receive cycles made be cross range integrated to provide additional SNR gain as long as the antenna beam has not moved off of the target area.

The example hybrid radar waveform 500 uses numbers for pulse and chirp parameters to demonstrate one illustrative example of using a hybrid radar interleaving scheme of this disclosure. The pulse bandwidths, transmit and receive times, transmit power, frequency spacing, number of pulses combined in stepped frequency processing, as well as type of frequency modulation, can be modified to suit the requirements of a particular application. This technique of interleaving, coupled with the example radar system and transceiver architectures discussed above with reference to FIGS. 1-4, may allow the repositioning of hybrid radar transmission synthesizer 102 for the start of the next repetition of the FMCW sweep of wave-train component 501 as soon as the last pulsed mode transmit interval 511 finishes.

The wave-train portion 513 is an unused portion of waveform 500 that may correspond to time left in a beam width as the radar antenna scans, and that may be used to contribute further to one of the functions described above, such as to add additional time to any of the other wave-train components 501-512 and increase SNR in one of those wave-train components.

In the example of wave-train 500, hybrid radar system 100 uses only an ascending sweep, as shown in wave-train component 501, for an FMCW transmit frequency sweep (and simultaneous receive interval). Doing so may avoid ghosting (or washing out) on moving objects, in some examples. In other examples, a hybrid radar system may also use a descending wave-train component, to coincide with the retrace of hybrid radar transmission synthesizer 102 back down to a lower frequency, to implement an additional FMCW transmit and receive component. Doing so may provide additional time on target, in some examples. In still other examples, a hybrid radar system may implement an FMCW transmit and receive component only on a descending frequency sweep. The saw-tooth FMCW chirp waveform components may therefore be performed on one or more up sweeps, one or more down sweeps, or on one or more of both up and down sweeps, in different examples.

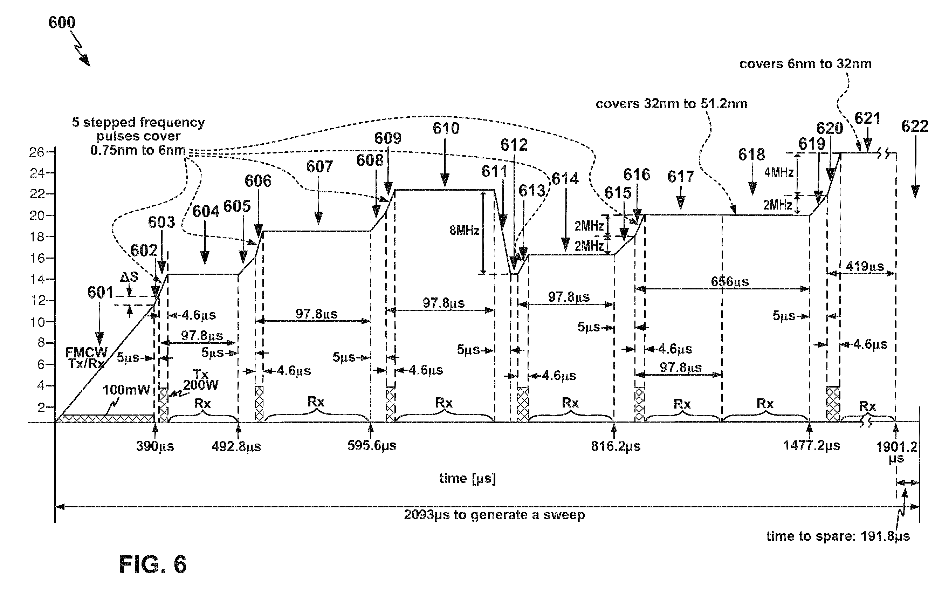

FIG. 6 shows a graph of another example hybrid radar wave-train 600 ("waveform 600") that combines FMCW radar signal components and pulsed radar signal components, which may be generated by a hybrid radar system (e.g., hybrid radar systems 100, 200, 300, 400 of FIGS. 1-4) in accordance with illustrative aspects of this disclosure. Wave-train 600 is plotted in frequency over time in FIG. 6, and is divided into various wave-train portions 601-621, some of which are used for FMCW radar and/or pulsed radar transmission and/or reception, as further explained below. Wave-train 600 may be based on different user inputs than wave-train 500 of the example of FIG. 5 as described above.

In the particular example of FIG. 6, hybrid radar transmission generating system 101 operates at 28 revolutions per minute (RPM), and generates hybrid radar wave-train 600 to include one FMCW radar transmit/receive component 601, followed by five stepped frequency pulses for pulsed radar (compared with the three pulses of wave-train 500 of FIG. 5), i.e., pulse transmit components 603, 606, 609, 613, 616 - one of which is a dual use pulse 616 and supports a longer range segment - and a sixth pulse 620 that may strictly utilize pulse compression. Wave-train 600 has a total duration of 2,093 microseconds to generate one radar sweep. Wave-train 600 includes stepped frequency pulses that cover a continuous range of frequencies in several discontinuous range segments, thereby mitigating effects such as MTAE.

In particular, pulses 603, 606, and 609 have frequency range gaps between them; pulse 613 covers the frequency range segment corresponding to the frequency range gap between pulses 603 and 606; and pulse 616 covers the frequency range segment corresponding to the frequency range gap between pulses 606 and 609. Waveform components 604, 607, 610, 614, and 617 serve as shorter-range pulsed mode receive portions corresponding to the respective pulse transmit portions previous to them, while waveform component 618 serves a more distant portion of the range profile by continuing to collect pulse returns from wave-train component 616 (a dual use pulse) beyond what was needed for the SF processing which combines returns from 604, 607, 610, 614, and 617. Longer-range pulsed mode receive interval 618 is interleaved into the sequence of pulsed mode transmit portions and shorter-range pulsed mode receive portions, such that its usage contributes to the delay between stepped frequency pulsed mode transmit portions, and helps mitigate drawbacks such as MTAE on the receive interval 621.

Wave-train component 602 serves as a short interval between FMCW radar transmit/receive component 601 and the subsequent pulsed mode transmit component 603. Wave-train components 605, 608, 611, 612, 615, and 619 serve as short intervals between one pulsed mode receive interval and a subsequent pulsed mode transmit interval. Wave-train component 622 may be used to reconfigure a transmit synthesizer LO for a subsequent start frequency, to switch between pulsed and FMCW modes, for additional time in any transmit or receive mode for FMCW radar or pulsed radar, or be left unused. Wave-train components 621 and 622 also provide a combined interval of time in which hybrid radar system 100 may retrace hybrid radar transmission synthesizer 102 back down to a lower frequency to prepare for a subsequent FMCW transmit and receive component, while maintaining receive components in configuration for the final pulsed mode receive interval 621, and potentially in another configuration during auxiliary interval 622. Wave-train 600 therefore also demonstrates an example of efficiency gains from operating synthesize and/or transmit portions of hybrid radar system 100 (e.g., hybrid radar transmission synthesizer 102, hybrid radar transmission control and processing system 104) to prepare for the FMCW mode at the same time as operating receive portions of hybrid radar system (e.g., hybrid radar transmission and reception system 120, pulsed mode receiver 140) in pulsed mode.

In the example of FIG. 6, FMCW radar transmit/receive wave-train component 601 has a sampling time Tₛ of 390 microseconds (µs), a transmit power (Pₜ) of 100 milliwatts (mW), and a bandwidth (BW) of 10.84 megahertz (MHz). Five of the six pulsed mode transmission components 603, 606, 609, 613, and 616 are implemented as linear FM stepped frequency pulse trains with a pulsed radar transmit time duration term τ_{µc} of 4.6 microseconds (µs), a transmit power Pₜ of 200 watts (W), and a bandwidth (BW) of 2 megahertz (MHz) each. The fifth of these pulsed mode transmit intervals, interval 616, is also used as the basis for the longer-range receive mode interval 618. The sixth pulsed mode transmission component 620 is implemented as a linear FM stepped frequency pulse train with a pulsed radar transmit time duration term τ_{µc} of 4.6 microseconds (µs), a transmit power Pₜ of 200 watts (W), and a bandwidth (BW) of 4 megahertz (MHz). These values are characteristic of the example of FIG. 6, and hybrid radar systems may implement wave-trains with still other parameters in other examples.

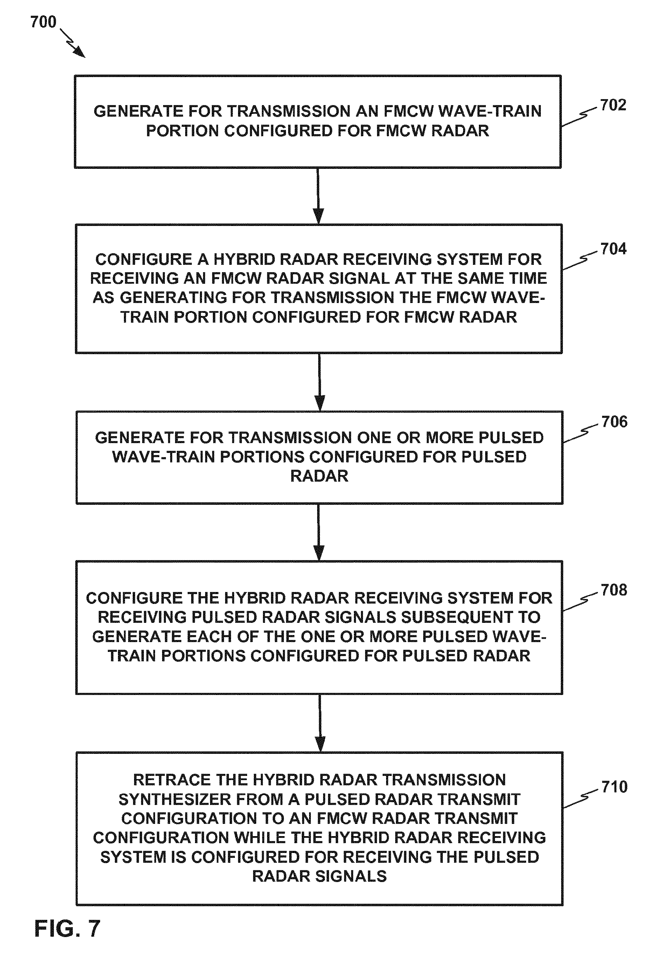

FIG. 7 shows a flowchart for a method 700 for operating a hybrid radar that combines FMCW radar and pulsed radar in a single radar wave-train, that may be performed by a hybrid radar system (e.g., hybrid radar systems 100, 200, 300, 400 of FIGS. 1-4), in accordance with illustrative aspects of this disclosure. Method 700 includes generating for transmission an FMCW wave-train portion configured for FMCW radar (702). Method 700 further includes configuring a hybrid radar receiving system for receiving an FMCW radar signal at the same time as generating for transmission the FMCW wave-train portion configured for FMCW radar (704). Method 700 further includes generating for transmission one or more pulsed wave-train portions configured for pulsed radar (706). Method 700 further includes configuring the hybrid radar receiving system for receiving pulsed radar signals subsequent to generating each of the one or more pulsed wave-train portions configured for pulsed radar (708). In some examples, method 700 may further include retracing the hybrid radar transmission synthesizer from a pulsed radar transmit configuration (e.g., a configuration for generating for transmission the one or more pulsed wave-train portions configured for pulsed radar (706)) to an FMCW radar transmit configuration (e.g., a configuration for generating for transmission the FMCW wave-train portion configured for FMCW radar (702)) while the hybrid radar receiving system is configured for receiving the pulsed radar signals (710).

Elements of a hybrid radar system as disclosed above may be implemented in any of a variety of additional types of solid state circuit elements, such as application-specific integrated circuits (ASICs), a magnetic nonvolatile random-access memory (RAM) or other types of memory, a mixed-signal integrated circuit, a central processing unit (CPU), a field programmable gate array (FPGA), a microcontroller, a programmable logic controller (PLC), a system on a chip (SoC), a subsection of any of the above, an interconnected or distributed combination of any of the above, or any other type of component or one or more components capable of being configured with an internal body tie in accordance with any of the examples disclosed herein. A hybrid radar system as in any of the examples herein may provide additional advantages in any of a variety of applications, including any application in which radar is used. Any of hybrid radar systems 100, 200, 300, 400 of the examples of FIGS. 1-4 as described above, or any component thereof, may be implemented as a device, a system, an apparatus, and may embody or implement a method of implementing hybrid radar, including for implementing example hybrid radar wave-trains 500 and 600 as described above with reference to FIGS. 5 and 6, and including method 700 as described with reference to FIG. 7.

Various illustrative aspects of the disclosure are described above. These and other aspects are within the scope of the following claims.

## Claims

1. A device comprising:
a hybrid radar system configured to generate a hybrid radar wave-train that interleaves Frequency-Modulated Continuous-Wave (FMCW) radar and pulsed radar wave-train components, wherein the hybrid radar system comprises:
a hybrid radar transmission synthesizer; and
a hybrid power amplification transmitter system, communicatively connected to modify signals from the hybrid radar transmission synthesizer.

2. The device of claim 1, wherein the hybrid radar system further comprises:
a hybrid radar controller, communicatively coupled to communicate control signals to the hybrid radar transmission synthesizer and the hybrid power amplification transmitter system.

3. The device of claim 1, wherein the hybrid radar transmission synthesizer comprises a synthesizer configured to generate modulated radio frequency (RF) wave-train components for the hybrid radar wave-train, wherein the synthesizer comprises at least one of a direct digital synthesizer (DDS) and a phase locked loop (PLL) synthesizer.

4. The device of claim 1, wherein the hybrid radar system is further configured to generate the hybrid radar wave-train such that generating the hybrid radar wave-train includes:
generating an FMCW wave-train portion configured for FMCW radar; and
generating a pulsed wave-train portion configured for pulsed radar.

5. The device of claim 4, wherein the hybrid radar system comprises:
a hybrid radar receiving system,
wherein the hybrid radar system is further configured to retrace the hybrid radar transmission synthesizer from a pulsed radar transmit configuration to an FMCW radar transmit configuration while the hybrid radar receiving system is in a pulsed radar receive mode.

6. The device of claim 4, wherein the FMCW wave-train portion configured for FMCW radar has a single frequency sweep and a power that is lower than a power of the pulsed wave-train portion.

7. The device of claim 6, wherein the hybrid radar system comprises:
a hybrid radar transmission generating system that comprises the hybrid radar transmission synthesizer,
wherein the hybrid radar receiving system is configured in an FMCW radar receive mode at the same time that the hybrid radar transmission generating system is in an FMCW radar transmit mode configured for generating the FMCW wave-train portion configured for FMCW radar.

8. The device of claim 6, wherein the single frequency sweep ascends from an initial frequency to a final frequency, wherein the final frequency is higher than the initial frequency, wherein the hybrid radar system is further configured to generate a second FMCW wave-train portion also configured for FMCW radar, wherein the second FMCW wave-train portion has an additional single frequency sweep that descends from a relatively higher initial frequency to a relatively lower final frequency from an additional initial frequency to an additional final frequency, wherein the additional final frequency is lower than the additional initial frequency.

9. The device of claim 4, wherein the pulsed wave-train portion configured for pulsed radar includes one or more frequency modulated pulses in different frequency ranges, and a power that is high compared to the FMCW wave-train portion.

10. The device of claim 9, wherein the one or more frequency modulated pulses are separated in time and have contiguous boundaries, thereby covering a larger combined frequency range with at least one frequency hop,
wherein the one or more frequency modulated pulses include three or more frequency modulated pulses in which the first two frequency modulated pulses are separated in frequency by a frequency range gap, and the third frequency modulated pulse fills the frequency range gap by which the first two frequency modulated pulses are separated, thereby covering the larger combined frequency range with at least two frequency hops.

11. The device of claim 9, wherein the hybrid radar system comprises:
a hybrid radar transmission generating system; and
a hybrid radar receiving system,
wherein the hybrid radar receiving system is configured in a pulsed radar receive mode for receive periods subsequent to each time the hybrid radar transmission generating system is in a pulsed radar transmit mode configured for generating the one or more frequency modulated pulses, and
wherein subsequent to generating one of the frequency modulated pulses, the hybrid radar receiving system is configured in a first pulsed radar receive mode and then in a second pulsed radar receive mode, wherein in the second pulsed radar receive mode the hybrid radar receiving system is configured for receiving longer range radar signals compared to the first pulsed radar receive mode.

12. A method for operating a hybrid radar that combines Frequency-Modulated Continuous-Wave (FMCW) radar and pulsed radar in a hybrid radar wave-train, the method comprising:
generating an FMCW wave-train portion configured for FMCW radar;
configuring a hybrid radar receiving system for receiving an FMCW radar signal at the same time as generating the FMCW wave-train portion configured for FMCW radar;
generating one or more pulsed wave-train portions configured for pulsed radar; and
configuring the hybrid radar receiving system for receiving pulsed radar signals subsequent to generating each of the one or more pulsed wave-train portions configured for pulsed radar.

13. The method of claim 12,
wherein the FMCW wave-train portion configured for FMCW radar has a single frequency sweep and a power that is lower than a power of the one or more pulsed wave-train portions,
wherein the single frequency sweep ascends from an initial frequency to a final frequency, such that the final frequency is higher than the initial frequency,
wherein the one or more pulsed wave-train portions configured for pulsed radar include one or more frequency modulated pulses in different frequency ranges, and a power that is higher than a power of the FMCW wave-train portion, and
wherein the one or more frequency modulated pulses are separated in time and have contiguous boundaries, thereby covering a larger combined frequency range with at least one frequency hop.

14. A hybrid radar system configured to generate a hybrid radar wave-train that combines Frequency-Modulated Continuous-Wave (FMCW) radar and pulsed radar, the hybrid radar system comprising:
means for generating an FMCW wave-train portion configured for FMCW radar;
means for configuring a hybrid radar receiving system for receiving an FMCW radar signal at the same time as generating the FMCW wave-train portion configured for FMCW radar;
means for generating one or more pulsed wave-train portions configured for pulsed radar; and
means for configuring the hybrid radar receiving system for receiving pulsed radar signals subsequent to generating each of the one or more pulsed wave-train portions configured for pulsed radar.

15. The hybrid radar system of claim 14,
wherein the FMCW wave-train portion configured for FMCW radar has a single frequency sweep and a power that is lower than a power of the one or more pulsed wave-train portions,
wherein the single frequency sweep ascends from an initial frequency to a final frequency, such that the final frequency is higher than the initial frequency,
wherein the one or more pulsed wave-train portions configured for pulsed radar include one or more frequency modulated pulses in different frequency ranges, and a power that is higher than a power of the FMCW wave-train portion, and
wherein the one or more frequency modulated pulses are separated in time and have contiguous boundaries, thereby covering a larger combined frequency range with at least one frequency hop.
